# EUROPEAN PATENT SPECIFICATION

(11) **EP 2 031 738 B1**
(45) Date of publication and mention of the grant of the patent: **13.10.2010**
(21) Application number: 07301332.8
(22) Date of filing: 30.08.2007
(51) Int. Cl.: H02K 5/14, H02K 5/15

(54) **Arrangement for an electric motor, and electric motor**
Anordnung für einen elektrischen Motor und elektrischer Motor
Agencement pour un moteur électrique et moteur électrique

(43) Date of publication of application: 04.03.2009
(73) Proprietor: Alcatel Lucent, 75008 Paris (FR)
(72) Inventor: Nägele, Andreas, 79793, Wutöschingen (DE); Berger, Thomas, 79859, Schluchsee (DE)
(74) Representative: Brose, Gerhard

(56) References cited:
- US-A- 2 663 810
- US-A- 3 159 763
- US-A- 4 614 886

## Description

The invention relates to an arrangement with fittings for at least two brushes for an electric motor according to the preamble of claim 1 and to an electric motor with such an arrangement.

Such an arrangement and an electric motor with such an arrangement are known from US 4,614,886.

All electric motors with rotors carrying coils for inducing electro-magnetic fields need brushes for energizing these coils. These brushes in cooperation with collectors rotating with the rotor ensure the correct commutation of the coils. Another possibility, not further considered here, is the use of a stator with stator coils being energized in an alternating way either by using alternating current or by commutating by means of electronics; there is no need to have a bridge from the stationary part to the rotating one.

Brushes as used for conducting the current from the stationary part to the rotating one have to be pressed against their rotating counterpart. On the one hand this means that they cannot be mounted fixedly on a substrate but have to be guided by suitable fittings. On the other hand this means that there need to be springs for compensating for deviations from the exact concentricity and from abrasion of the brushes.

The brush-springs usually are made from a spring wire that is wound around a cylindrical bearing and rests with the free end on a further bearing. Though both kinds of such bearings have to resist to higher forces, the cylindrical bearings demand more attention.

It is known to have metal cylinders riveted on a printed circuit board that often is used to carry the fittings for the brushes. Riveting is a technology that is unwanted in automated mass production.

The invention therefor seeks to find a solution that is better adapted to automated mass production.

According to the invention such solution lies in an arrangement for an electric motor according to the teaching of claim 1 and an electric motor with such arrangement, according to the teachings of claim 5.

Further embodiments of the invention are to be found in the subclaims and in the following description.

The invention is based on the use of separate parts for holding the brushes on the one hand and for fixing the brush-springs on the other hand. Then independent technologies for both can be used.

In the following the invention will be described with the aid of the enclosed drawings:
- Figure 1: shows an end shield of an electric motor as an example of a second predominantly disk- or plate-shaped element as part of an arrangement according to the invention.
- Figure 2: shows a brush plate of an electric motor as an example of a first predominantly disk- or plate-shaped element as part of an arrangement according to the invention.
- Figure 3: shows both, an end shield, and a brush plate of an electric motor as an example of an arrangement according to the invention.

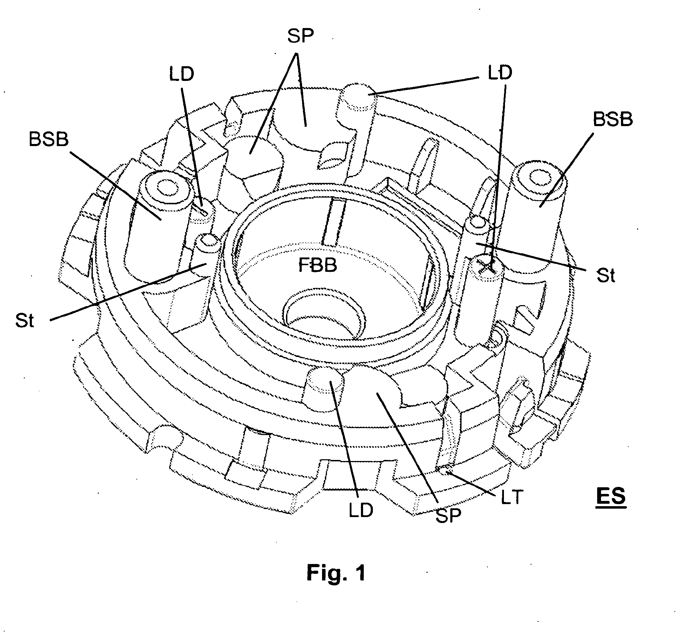

Based on figure 1 first a normal end shield ES of an electric motor is described. It is predominantly a disk- or plate-shaped element, that is a disk- or plate-shaped element carrying some protrusions and recesses for various tasks.

As a foot we see a somehow disk-shaped protrusion protruding radial outward. This forms the cover of the end shield and is a stop for the cylindrical part of the motors housing, when receiving this end shield. We also see a chamfer at the higher part of this end shield to ease the gliding of the cylinder thereon.

At the center of this end shield we see a hole for the output shaft of the motor surrounded by a fitting FBB for a ball bearing. Also this fitting FBB is chamfered for easily receiving the ball bearing.

We also see a lead-through LT for an electrical connection.

As an adaptation to the invention we see some kind of supports SP for superimposing a further predominantly disk- or plate-shaped element, in our example a brush plate BP. Such a brush plate often is a printed circuit board, but in our example, not necessary for the invention, it is a board with free wiring. We see, that there are parts of the end shield ES, that are within the circular part of this support and are lower than this. This gives room for electric or electronic elements below the brush plate BP.

Projecting from the supports SP are four leads LD, which are to pass through the brush plate BP and to fix it with respect to the end shield ES. These leads, as well as the elements to be mentioned below, also are chamfered to easily pass through the brush plate BP and to nevertheless give an exact fitting of the same. In case of a non-circular cross-section of the motor, mostly then a square one, such leads would not be necessary. In addition the elements to be mentioned below also act as such leads. Signs, + and -, on two of these leads LD give an orientation.

The main elements of this invention, apart from the two levels of this arrangement, are two cylindrical bearings BSB for brush springs, each for one of the two brushes in this example. The dimensions of these bearings BSB result from the mechanical and geometrical needs of the brush springs.

Those ends of the brush springs not pushing on the brushes have to be supported by any kind of a stop, here cylindrical stops St as further protrusions of the end shield ES are used.

It is easy to see, that such end shield ES with all its protrusions and recesses can easily be manufactured as an injection-formed part made out of plastics. Apart from the fact that it is not absolutely necessary, that this part be insulating and therefor made of plastics, this disk- or plate-shaped element could as well be separated into two such elements, especially the proper end shield on the one hand and the parts for supporting the second layer and the brush springs on the other hand. Than, of course, also different materials might be used.

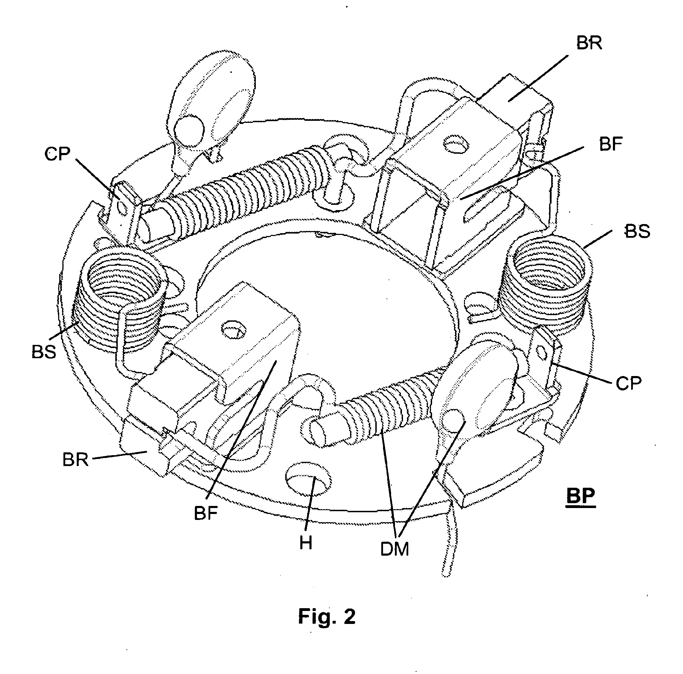

Figure 2 now shows the second level of an example of an arrangement according to the invention. We see a circular disk carrying mainly electric and electronic components, above all two brush fittings BF for receiving brushes BR. Thus this disk plays the role of the brush plate BP of the motor. As already mentioned, such brush plates BP mostly are printed circuit boards, but in this example are not. This has nothing to do with the invention.

From each brush BR on the one hand a flexible contact lead (not labeled) connects the brush via a coil to a contact pin CP, and on the other hand a brush spring BS is foreseen to push the brush onto the collector of the motor's rotor. Each coil together with a capacitor builds a dejamming means DM. We also see openings for the connecting leads to be attached onto the connector pins and leaving the motor through these openings and through respective recesses in the end shield ES. The other ends of the capacitors leave the motor through other such openings in the brush plate and through the already mentioned lead-troughs LT in the end shield.

In order to position the brush plate BP relative to the end shield ES the brush plate BP includes holes H for receiving the leads LD of the end shield.

We also see other holes for receiving the stops St and the bearings BSB for brush springs. Before combining the two layers the brush springs BS are not supported.

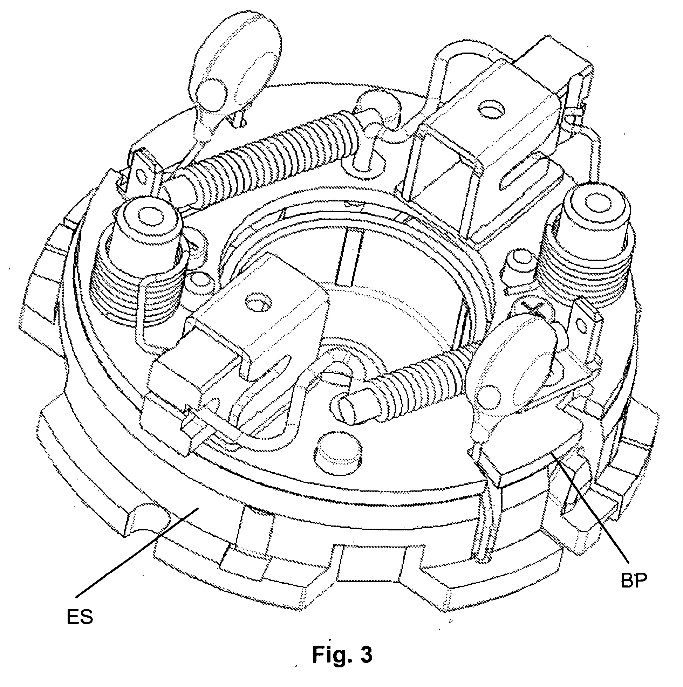

Figure 3 shows both, an end shield ES, and a brush plate BP of an electric motor as an example of an arrangement according to the invention. This is the combination of the two exemplary disk- or plate-shaped elements of figures 1, and 2. Here it is to be seen, that the brush springs BS have clear support by the bearings BSB for brush springs and the stops St.

The view into the internal opening at first glance is a little bit confusing. We see the wall of the fitting FBB for a ball bearing with its flat top and the chamfered edge, we see the upper disk or plate, and in between we have a look into the free space between the disks or plates as a result of the position of the supports SP.

An electric motor equipped with such arrangement is also within the scope of the invention as defined by the appended claims.

## Claims

1. Arrangement with fittings (BF) for at least two brushes (BR) for an electric motor, where to each fitting (BF) is assigned a bearing (BSB) for carrying a brush-spring (BS), the arrangement including two predominantly disk- or plate-shaped elements, the first disk- or plate-shaped element (BP) carrying the fittings (BF) for the brushes (BR), **characterized in, that** the second disk- or plate-shaped element (ES) carries the bearings (BSB) for carrying a brush-spring (BS), and that the first disk- or plate-shaped element (BP) shows openings (H) through which the bearings (BSB) pass.

2. Arrangement according to claim 1, **characterized in, that** the second disk- or plate-shaped element (ES) is an injection-formed part made of plastics.

3. Arrangement according to claim 1, **characterized in, that** the second disk- or plate-shaped element (ES) further has the function of an end plate of the motor.

4. Arrangement according to claim 1, **characterized in, that** the second disk- or plate-shaped element (ES) carries further bearings (St), that allow for the tensioning of the brush-springs (BS) and to this end pass through the first disk- or plate-shaped element (BP).

5. Electric motor with an arrangement according to claim 1.

## Patentansprüche

1. Anordnung mit Halterungen (BF) für mindestens zwei Bürsten (BR) für einen elektrischen Motor, wobei jeder Halterung (BF) ein Lager (BSB), welches eine Bürstenfeder (BS) trägt, beigeordnet ist, wobei die Anordnung zwei vorwiegend scheiben- oder plattenförmige Elemente umfasst, wobei das erste scheiben- oder plattenförmige Element (BP) die Halterungen (BF) für die Bürsten (BR) trägt, **dadurch gekennzeichnet, dass** das zweite scheiben- oder plattenförmige Element (ES) die Lager (BSB), welche eine Bürstenfeder (BS) tragen, trägt, und dass das erste scheiben- oder plattenförmige Element (BP) Öffnungen (H) aufweist, durch welche die Lager (BSB) geführt werden.

2. Anordnung nach Anspruch 1, **dadurch gekennzeichnet, dass** das zweite scheiben- oder plattenförmige Element (ES) ein Spritzformteil aus Kunststoff ist.

3. Anordnung nach Anspruch 1, **dadurch gekennzeichnet, dass** das zweite scheiben- oder plattenförmige Element (ES) weiterhin die Funktion einer Endplatte des Motors hat.

4. Anordnung nach Anspruch 1, **dadurch gekennzeichnet, dass** das zweite scheiben- oder plattenförmige Element (ES) weitere Lager (St) trägt, welche das Spannen der Bürstenfedern (BS) ermöglichen und zu diesem Zweck durch das erste scheiben- oder plattenförmige Element (BP) geführt werden.

5. Elektrischer Motor mit einer Anordnung nach Anspruch 1.

## Revendications

1. Agencement avec pièces de fixation (BF) pour au moins deux balais (BR) d'un moteur électrique, dans lequel à chaque fixation (BF) est assigné un roulement (BSB) pour porter un ressort de porte-balais (BS), l'agencement comprenant deux éléments principalement en forme de disque ou de plaque, le premier élément en forme de disque ou de plaque (BP) portant les fixations (BF) pour les balais (BR), **caractérisé en ce que** le deuxième élément en forme de disque ou de plaque (ES) porte les roulements (BSB) pour porter un ressort de porte-balai (BS) et **en ce que** le premier élément en forme de disque ou de plaque (BP) présente des ouvertures (H) par lesquelles les roulements (BSB) passent.

2. Agencement selon la revendication 1, **caractérisé en ce que** le deuxième élément en forme de disque ou de plaque (ES) est une pièce formée par injection en plastique.

3. Agencement selon la revendication 1, **caractérisé en ce que** le deuxième élément en forme de disque ou de plaque (ES) possède en outre la fonction d'une plaque de fond du moteur.

4. Agencement selon la revendication 1, **caractérisé en ce que** le deuxième élément en forme de disque ou de plaque (ES) porte des roulements supplémentaires (St) qui permettent de mettre sous tension les ressorts de porte-balai (BS) et à cette fin passent par le premier élément en forme de disque ou de plaque (BP).

5. Moteur électrique comportant un agencement selon la revendication 1.
